# EUROPÄISCHE PATENTANMELDUNG

(11) **EP 3 626 077 A1**
(43) Veröffentlichungstag der Anmeldung: **25.03.2020**
(21) Anmeldenummer: 18195871.1
(22) Anmeldetag: 21.09.2018
(51) Int. Cl.: A01M 1/02, A01M 1/04, A01M 1/10, A01M 1/14

(54) **SCHÄDLINGSKONTROLLE**

(71) Anmelder: Bayer AG, 51373 Leverkusen (DE)
(72) Erfinder: Die Erfindernennung liegt noch nicht vor
(74) Vertreter: BIP Patents

(57) **Zusammenfassung**

Die vorliegende Erfindung befasst sich mit dem Gebiet der Schädlingskontrolle. Gegenstände der vorliegenden Erfindung sind eine Vorrichtung, ein System, ein Computerprogrammprodukt und ein Verfahren zur Schädlingskontrolle.

## Beschreibung

Die vorliegende Erfindung befasst sich mit dem Gebiet der Schädlingskontrolle. Gegenstände der vorliegenden Erfindung sind eine Vorrichtung, ein System, ein Computerprogrammprodukt und ein Verfahren zur Schädlingskontrolle.

Beim Pflanzenschutz ist das Ermitteln von Schadschwellen aus ökologischer und wirtschaftlicher Sicht unabdingbar. Die Schadschwelle gibt die Befallsdichte mit Schaderregern, Krankheiten oder den Besatz mit Unkräutern an, ab denen eine Bekämpfung wirtschaftlich sinnvoll wird. Bis zu diesem Wert ist der wirtschaftliche Mehraufwand durch eine Bekämpfung größer als der zu befürchtende Ernteausfall. Übersteigt der Befall diesen Wert, werden die Bekämpfungskosten durch den zu erwartenden Mehrertrag zumindest ausgeglichen.

Je nach dem Wesen eines Schädlings oder einer Krankheit kann die Schadschwelle sehr unterschiedlich sein. Bei Schädlingen oder Krankheiten, die nur mit großem Aufwand und mit negativen Begleiterscheinungen für die weitere Produktion zu bekämpfen sind, kann die Schadschwelle sehr hoch sein. Kann jedoch schon ein geringer Befall zu einem Ausbreitungsherd werden, der die gesamte Produktion zu vernichten droht, kann die Schadschwelle sehr niedrig sein.

Die wichtigste Voraussetzung, um die Schadschwelle erkennen zu können, ist eine effiziente Befallskontrolle. Hierzu werden Fallen wie beispielsweise beleimte Farbtafeln oder Fangschalen verwendet, mit deren Hilfe Schadorganismen gefangen, identifiziert und ausgezählt werden. Bei Rapsschädlingen werden beispielsweise Gelbfangschalen verwendet, die mit Hilfe ihrer gelben Farbe die Schädlinge anlocken. Die Fangschale ist mit Wasser gefüllt, dem ein Tensid beigefügt wurde, um die Oberflächenspannung zu erniedrigen, so dass angelockte Schädlinge ertrinken. Im Fall einer beleimten Tafel bleiben die Schädlinge am Leim kleben.

Die Fallen werden regelmäßig kontrolliert. Durch Zählen der in einer Falle befindlichen Schädlinge lassen sich Schadschwellen ermitteln. Das Auszählen ist jedoch mühsam und fehleranfällig.

In WO2018/054767 wird ein System umfassend eine Falle für Schadorganismen, ein Smartphone und einen Server offenbart. Ein Landwirt kann mit dem Smartphone digitale Bildaufnahmen von dem Falleninhalt erzeugen. Die Bildaufnahmen werden über ein Funknetzwerk auf einen Server übertragen und dort ausgewertet. Der Landwirt erhält eine Mitteilung von dem Server über die Anzahl und die Art der gefangenen Schadorganismen. Nachteilig an dem in WO2018/054767 offenbarten System ist, dass Fallen von einem Menschen aufgesucht werden müssen, um eine Befallskontrolle durchführen zu können.

Aus landwirtschaftlicher Sicht ist jedoch nicht nur die Befallsdichte mit Schädlingen von Bedeutung sondern auch die Anwesenheit von Nützlingen, denen Schädlinge als Nahrungsquelle oder Wirt dienen, oder die aus anderen Gründen für eine erfolgreiche Ernte von Bedeutung sind (z.B. Bestäuber). Es ist beispielsweise denkbar, dass die Befallsdichte zwar hoch ist, den Schädlingen aber eine ausreichende Zahl an Nützlingen gegenübersteht, die ein weitere Vermehrung und/oder Ausbreitung der Schädlinge verhindert. Es ist also denkbar, dass die Zahl einer bestimmten Schädlingsart in einem Bereich allein keine Aussage darüber erlaubt, ob von dem Schädling eine Bedrohung für die Ernte ausgeht. Ist gleichzeitig eine ausreichend große Zahl an Nützlingen vorhanden, die den Schädlingen Einhalt gebietet, ist das Risiko eines Ernteverlusts als gering einzustufen. Es ist denkbar, dass in einem solchen Fall keine Maßnahmen gegen die Schädlinge ergriffen werden sollten, denn einige Maßnahmen (zum Beispiel die Applikation von Insektiziden) können auch negative Begleiterscheinungen haben (z.B. Resistenzbildung, phytotoxische Eigenschaften, Bekämpfung von Nützlingen).

Auch der Zustand der angebauten Pflanzen kann entscheidend sein, ob bei einer gegebenen Befallsdichte ein Ernteverlust droht oder nicht, denn kranke oder geschwächte Pflanzen werden eher durch Schädlinge geschädigt als gesunde Pflanzen.

Gesucht wird daher eine Lösung, die hilft, den personellen Aufwand zur Bedarfskontrolle möglichst gering zu halten. Gesucht wird ferner eine Lösung, bei der ein Befallsrisiko möglichst frühzeitig identifiziert wird, damit Maßnahmen zur Verhinderung des Befalls getroffen werden können. Gesucht wird ferner eine Lösung, die es ermöglicht, Nützlinge zu identifizieren und bei der Schadenprognose zu berücksichtigen. Gesucht wird ferner eine Lösung, die es ermöglicht, den Zustand der angebauten Pflanzen zu ermitteln und bei der Schadenprognose zu berücksichtigen.

Diese Aufgaben werden durch die Gegenstände der unabhängigen Ansprüche gelöst. Bevorzugte Ausführungsformen finden sich in den abhängigen Ansprüchen und in der vorliegenden Beschreibung.

Ein erster Gegenstand der vorliegenden Erfindung ist ein System umfassend:
- eine Mehrzahl an Bildaufnahmevorrichtungen in einem Gebiet, wobei jede Bildaufnahmevorrichtung
   ∘ einen Sammelbereich,
   ∘ eine Bildaufnahmeeinheit,
   ∘ eine Sendeeinheit, und eine
   ∘ eine Steuereinheit
   umfasst,
   wobei die Steuereinheit konfiguriert ist,
   ▪ die Bildaufnahmeeinheit zu veranlassen, Bildaufnahmen von dem Sammelbereich zu erzeugen, und
   ▪ die Sendeeinheit zu veranlassen, Informationen betreffend die Bildaufnahmen über ein Netzwerk an ein Computersystem zu versenden,
- das Computersystem, das konfiguriert ist,
   - die Informationen betreffend die Bildaufnahmen von der Mehrzahl an Bildaufnahmevorrichtungen zu empfangen,
   - die empfangenen Informationen zu analysieren, wobei Informationen zu den in einem Teilgebiet vorhandenen Schädlingen und/oder Nützlingen gewonnen werden,
   - die Informationen zu den in einem Teilgebiet vorhandenen Schädlingen und/oder Nützlingen einem oder mehreren Nutzern zu übermitteln.

Ein weiterer Gegenstand der vorliegenden Erfindung ist ein Verfahren umfassend die Schritte
- Aufstellen einer Mehrzahl an Bildaufnahmevorrichtungen in einem Gebiet, wobei jede Bildaufnahmevorrichtung
   ∘ einen Sammelbereich,
   ∘ eine Bildaufnahmeeinheit,
   ∘ eine Sendeeinheit, und eine
   ∘ eine Steuereinheit
   umfasst,
- Erzeugen von Bildaufnahmen des Sammelbereichs jeder Bildaufnahmevorrichtung,
- Übermitteln von Informationen betreffend die Bildaufnahmen an ein Computersystem,
- Analysieren der übermittelten Informationen und Generieren von Informationen zu den in einem Teilgebiet vorhandenen Schädlingen und/oder Nützlingen,
- Übermitteln der Informationen zu den in einem Teilgebiet vorhandenen Schädlingen und/oder Nützlingen an einen oder mehrere Nutzer.

Ein weiterer Gegenstand der vorliegenden Erfindung ist ein Computerprogrammprodukt umfassend ein Computerprogramm, das in einen Arbeitsspeicher eines Computers geladen werden kann und dort den Computer dazu veranlasst, folgende Schritte ausführen:
- Empfangen von Informationen von einer Mehrzahl an Bildaufnahmevorrichtungen in einem Gebiet, wobei die Informationen von jeder Bildaufnahmevorrichtung Bildaufnahmen betreffen, die von einem Sammelbereich der Bildaufnahmevorrichtung erzeugt worden sind,
- Analysieren der empfangenen Informationen und Generieren von Informationen zu den in einem Teilgebiet vorhandenen Schädlingen und/oder Nützlingen,
- Übermitteln der Informationen zu den in einem Teilgebiet vorhandenen Schädlingen und/oder Nützlingen an einen oder mehrere Nutzer.

Die Erfindung wird nachstehend näher erläutert, ohne zwischen den Erfindungsgegenständen (System, Computerprogrammprodukt, Verfahren) zu unterscheiden. Die nachfolgenden Erläuterungen sollen vielmehr für alle Erfindungsgegenstände in analoger Weise gelten, unabhängig davon, in welchem Kontext (System, Computerprogrammprodukt, Verfahren) sie erfolgen.

Wenn in der vorliegenden Beschreibung oder in den Patentansprüchen Schritte in einer Reihenfolge genannt sind, bedeutet dies nicht zwingend, dass die Erfindung auf die genannte Reihenfolge beschränkt ist. Vielmehr ist denkbar, dass die Schritte auch in einer anderen Reihenfolge oder auch parallel zueinander ausgeführt werden; es sei denn, ein Schritt baut auf einem anderen Schritt auf, was zwingend erforderlich macht, dass der aufbauende Schritt nachfolgend ausgeführt wird (was im Einzelfall aber deutlich wird). Die genannten Reihenfolgen stellen damit bevorzugte Ausführungsformen der Erfindung dar.

Mit Hilfe der vorliegenden Erfindung kann die Anwesenheit von Schädlingen und/oder Nützlingen in einem Gebiet bestimmt werden.

Unter einem "Schädling" wird in dieser Beschreibung ein tierischer Schadorganismus verstanden, der beim Anbau von Kulturpflanzen in Erscheinung treten und die Kulturpflanze schädigen, oder die Ernte der Kulturpflanze negativ beeinflussen kann.

Vorzugsweise handelt es sich um einen tierischen Schädling aus der Gruppe der Insekten (in den verschiedenen Stadien von Larve (Raupe, Afterraupe) bis zum Adultstadium), Schnecken, Würmer oder Spinnentiere. Besonders bevorzugt handelt es sich um ein Insekt, ganz besonders bevorzugt um einen Schädling, der sich durch eine Farbe (z.B. die gelbe Farbe bei Gelbfangschalen) anlocken lässt. Beispiele für derartige Schädlinge sind Rapsschädlinge wie beispielsweise Großer Rapsstengelrüssler, Gefleckter Kohltriebrüssler, Rapsglanzkäfer, Kohlschotenrüssler, Kohlschotenmücke und Rapserdfloh.

Unter einem "Nützling" wird ein tierischer Organismus verstanden, dem ein Schädling als Nahrungsquelle oder Wirt dient oder der aus anderen Gründen für eine erfolgreiche Ernte von Bedeutung ist (z.B. als Bestäuber). Vorzugsweise handelt es sich bei dem Nützling um ein Insekt (in den verschiedenen Stadien von Larve (Raupe, Afterraupe) bis zum Adultstadium) oder ein Spinnentier.

Schädlinge und Nützlinge werden in dieser Beschreibung auch als Gliederfüßer (lat. Arthorpoda) bezeichnet.

Unter einem "Gebiet" wird ein räumlich abgrenzbarer Bereich der Erdoberfläche verstanden, der landwirtschaftlich genutzt wird, indem auf einem oder mehreren Feldern Kulturpflanzen angepflanzt, mit Nährstoffen versorgt und geerntet werden. Vorzugsweise umfasst ein Gebiet eine Vielzahl an Feldern für Kulturpflanzen. In einer bevorzugten Ausführungsform entspricht ein Gebiet einem Anbaugebiet für eine Kulturpflanze (zur Definition eines Anbaugebietes siehe z.B. Journal für Kulturpflanzen, 61 (7). S. 247-253, 2009, ISSN 0027-7479). In einer anderen bevorzugten Ausführungsform entspricht ein Gebiet einem Boden-Klima-Raum (zur Definition eines Boden-Klima-Raumes siehe z.B. Nachrichtenbl. Deut. Pflanzenschutzd., 59(7), S. 155-161, 2007, ISSN 0027-7479).

Unter einem "Teilgebiet" wird ein vorzugsweise zusammenhängender Bereich innerhalb eines Gebietes verstanden. Vorzugsweise handelt es sich um ein oder mehrere Felder, in denen eine spezifische Kulturpflanze angebaut wird. Vorzugsweise wird das Teilgebiet von einem Landwirt bewirtschaftet, für den eine Mehrzahl an Bildaufnahmevorrichtung und ggf. eine oder mehrere Pflanzenanalysevorrichtungen registriert sind. Die Ermittlung von Befallsdichten und Schadschwellen erfolgt vorzugsweise für ein Teilgebiet, insbesondere dann, wenn das Gebiet so groß ist, dass die für ein Teilgebiet ermittelte Befallsdichte eine Schadschwelle überschreitet und die für anderes Teilgebiet desselben Gebiets ermittelte Befallssichte die Schadschwelle nicht überschreitet.

Zur Ermittlung der Anwesenheit von Schädlingen und/oder Nützlingen in einem Gebiet wird eine Mehrzahl an Bildaufnahmevorrichtungen eingesetzt. Die Bildaufnahmevorrichtungen sind vorzugsweise über das gesamte Gebiet verteilt. Vorzugsweise sind sie in Feldern einer spezifischen Kulturpflanze (z.B. Raps) aufgestellt, da solche Felder eine charakteristische Fauna aufweisen. Vorzugsweise wird durch Ausübung der Erfindung die in den Feldern der spezifischen Kulturpflanze lebende Fauna (Schädlinge/Nützlinge) analysiert.

Mit Hilfe einer Bildaufnahmevorrichtung wird analysiert, welche Schädlinge/Nützlinge und wie viele Schädlinge/Nützlinge sich in dem Bereich (z.B. Feld) aufhalten, in dem die Bildaufnahmevorrichtung aufgestellt ist.

Erfindungsgemäß werden daher mit Hilfe einer Bildaufnahmevorrichtung Schädlinge und/oder Nützlinge gezählt und die jeweils vorliegenden Spezies bestimmt.

Es ist denkbar, dass eine erfindungsgemäße Bildaufnahmevorrichtung sowohl Schädlinge als auch Nützlinge zählt und identifiziert. Es ist aber auch denkbar, dass verschiedene Bildaufnahmevorrichtungen verwendet werden, von denen ein Typ zur Identifizierung und Mengenbestimmung von (spezifischen) Schädlingen hergerichtet ist und ein anderer Typ zur Identifizierung und Mengenbestimmung von (spezifischen) Nützlingen hergerichtet ist.

Eine Bildaufnahmevorrichtung umfasst einen Sammelbereich, eine Bildaufnahmeeinheit, eine Sendeeinheit, und eine Steuereinheit.

Der Sammelbereich ist ein Bereich, der von Gliederfüßern (Nützlingen und/oder Schädlingen) aufgesucht werden kann. Es kann sich dabei um eine ebene Oberfläche einer Tafel oder Karte handeln. Es kann sich auch um den Boden eines Behälters handeln.

Es ist denkbar, dass eine Bildaufnahmevorrichtung über mehrere Sammelbereiche verfügt. Es ist auch denkbar, dass eine Bildaufnahmevorrichtung über verschiedene Sammelbereiche verfügt, zum Beispiel einen Sammelbereich für (spezifische) Schädlinge und einen anderen Sammelbereich für (spezifische) Nützlinge.

Der Sammelbereich ist vorzugsweise eine ebene Fläche mit einem runden, ovalen, eckigen (dreieckig, viereckig, fünfeckig, sechseckig oder allgemein n-eckig, mit n als ganzer Zahl, die größer oder gleich drei ist) Querschnitt. Vorzugsweise ist der Querschnitt rund oder rechteckig (insbesondere quadratisch). Von der Fläche können sich Wandungen nach oben erstrecken, so dass sich ein Behälter ergibt. Der Behälter kann zylinderförmig, konusförmig oder kastenförmig ausgeführt sein. Vorzugsweise weist er einen runden Querschnitt auf und die Wandungen erstrecken sich vom Boden konusförmig nach oben, wobei Bodenfläche und Wandfläche in einem Winkel von mehr als 90° und weniger als 120° zueinander verlaufen.

Der Sammelbereich kann Teil einer Fangvorrichtung für Schädlinge sein, wie beispielsweise einer Gelbfangschale oder einer beleimten Farbtafel.

Neben oder anstelle einer Farbe können weitere/andere Mittel vorhanden sein, die Gliederfüßer anlocken (Lockmittel). Denkbar ist zum Beispiel die Verwendung eines Pheromons oder eines Duftstoffes, der eine Nahrungsquelle vortäuscht.

Bei Verwendung eines oder mehrerer Lockmittel(s) ist dessen/deren Einfluss auf die Menge angelockter Gliederfüßer zu berücksichtigen: in einen Sammelbereich mit Lockmittel gelangen bei gleicher Befallsdichte mehr Gliederfüßer als in einen Sammelbereich ohne Lockmittel. Vorzugsweise werden ein oder mehrere Lockmittel verwendet, die zumindest über den Zeitraum zwischen Aufstellen der Falle und erster Befallskontrolle eine konstante Wirkung erzielen. Da eine Farbe als Lockmittel über einen solchen Zeitraum in der Regel konstant bleibt, hat sie einen Vorteil gegenüber einem Pheromon, das sich schnell verflüchtigen kann.

Im Falle der Verwendung einer Fangschale ist diese üblicherweise mit Wasser und gegebenenfalls einem oder mehreren Zusätzen gefüllt. Ein solcher Zusatz kann beispielsweise ein Tensid zur Erniedrigung der Oberflächenspannung sein. Ein solcher Zusatz kann auch ein Lockstoff zum Anlocken von (spezifischen) Gliederfüßern sein. Ein solcher Zusatz kann auch ein Mittel zur Verhinderung von Algenbildung (beispielsweise ein Herbizid) sein.

Im Falle einer Karte oder Tafel kann diese mit einem Klebstoff versehen sein, um Schädlinge bewegungsunfähig zu machen. Bei einem Sammelbereich für Nützlinge wird vorzugsweise auf einen Klebstoff oder andere Mittel, die den Nützlingen schaden könnten, verzichtet.

Vorzugsweise wird der Sammelbereich durch die Oberfläche einer Karte oder Tafel gebildet.

Es ist denkbar, dass die Bildaufnahmevorrichtung über Mittel zur Reinigung des Sammelbereichs verfügt. Es ist denkbar, dass sich im Sammelbereich im Lauf der Zeit Schmutz ansammelt, der eine Identifizierung und Auszählung von Schädlingen und/oder Nützlingen erschwert. Es kann sich bei solchen Reinigungsmitteln beispielsweise um eine oder mehrere Düsen handeln, aus der Druckluft auf den Sammelbereich geblasen wird, um Schmutz fortzublasen. Es kann sich um eine oder mehrere Düsen handeln, aus der eine Flüssigkeit (z.B. Wasser ggf. mit einem oder mehreren Zusätzen wie beispielsweise einem Tensid) auf den Sammelbereich gesprüht werden kann, um Schmutz fortzuspülen. Es kann sich um einen Aktuator handeln, der die Oberfläche des Sammelbereichs zur Seite oder nach unten bewegt, damit Schmutz von der Oberfläche fällt. Es ist denkbar, dass es sich um eine Rüttelplatte handelt, die den Sammelbereich hin und her bewegt, um anhaftenden Schmutz besser zu lösen. Es ist denkbar, dass mehrere der genannten Mittel und/oder weitere Mittel miteinander kombiniert werden.

Vorzugsweise weist die Bildaufnahmevorrichtung Mittel auf, mit der die Bildaufnahmevorrichtung auf einem Boden oder in einem Boden stationiert werden kann. Vorzugsweise lässt sich die Bildaufnahmevorrichtung in dem Boden befestigen, um ein Umstürzen zum Beispiel bei Sturm zu verhindern. Vorzugsweise sind Mittel vorhanden, mit denen der Abstand zwischen Boden und Sammelbereich variiert werden kann. Ein Beispiel einer solchen Höhenverstellung ist ein Teleskopstab, der mit einem Ende im Boden befestigt werden kann und an dessen anderem Ende der Sammelbereich angebracht ist. Ein anderes Beispiel einer Höhenverstellung ist eine Hebebühne. Eine solche variable Höhenverstellung ermöglicht es, den Sammelbereich oberhalb der Pflanzen zu positionieren, so dass Fluginsekten den Sammelbereich bei einem Überflug über die angebauten Pflanzen erkennen können. Die variable Höhenverstellung erlaubt ein Anpassen der Höhe des Sammelbereichs (Abstand zum Boden) an die wachsenden Pflanzen, um zu verhindern, dass die umgebenden Pflanzen den Sammelbereich verdecken. In einer bevorzugten Ausführungsform erfolgt die Höhenverstellung automatisch. Sie passt sich vorzugsweise so an, dass der Sammelbereich stets oberhalb oder auf der Höhe der umgebenden Pflanzen liegt. Dies kann durch Abstandssensoren und/oder Helligkeitssensoren bewerkstelligt werden.

Die erfindungsgemäße Vorrichtung umfasst ferner eine oder mehrere Bildaufnahmeeinheiten. Mit einer solchen Bildaufnahmeeinheit können digitale Bildaufnahmen erzeugt werden. Eine Bildaufnahmeeinheit umfasst einen Bildsensor und optische Elemente. Der Bildsensor ist eine Vorrichtung zur Aufnahme von zweidimensionalen Abbildern aus Licht auf elektrischem Weg. Üblicherweise handelt es sich um halbleiterbasierte Bildsensoren wie beispielsweise CCD- (CCD = *charge-coupled device*) oder CMOS-Sensoren (CMOS = *complementary metal-oxide-semiconductor*). Die optischen Elemente (Linsen, Blenden und dergleichen) dienen einer möglichst scharfen Abbildung des Objektes, von dem eine digitale Bildaufnahme erzeugt werden soll, auf dem Bildsensor.

Die Bildaufnahmeeinheit ist so positioniert, dass der gesamte Sammelbereich oder zumindest ein Teil des Sammelbereichs auf dem Bildsensor abgebildet wird. Es ist denkbar, mehrere Bildaufnahmeeinheiten zu verwenden, die verschiedene Bereiche des Sammelbereichs auf dem jeweiligen Bildsensor abbilden. Bei einer solchen Verwendung mehrerer Bildaufnahmeeinheiten ist es vorteilhaft, wenn sich die abgebildeten Bereiche zumindest teilweise überlappen, um aus den einzelnen Bildaufnahmen zu einem späteren Zeitpunkt ein Gesamtbild erzeugen zu können.

Die erfindungsgemäße Vorrichtung weist vorzugsweise eine Halterung auf, an der die Bildaufnahmeeinheit fixiert ist oder reversibel fixiert werden kann. Die Halterung befindet sich in einem definierten und gleichbleibenden Abstand zum Sammelbereich und gewährleistet damit einen definierten und gleichbleibenden Abstand zwischen dem Bildsensor und dem Sammelbereich.

Es ist denkbar, dass oberhalb des Sammelbereichs ein Gitter oder Netz (allgemein als Barriere bezeichnet) angebracht ist, das verhindern soll, dass Blätter oder dergleichen (Schmutz) in den Sammelbereich gelangen. Die Seiten des Sammelbereichs bleiben vorzugsweise frei, damit Schädlinge und Nützlinge von den Seiten in den Sammelbereich gelangen können. Es ist aber auch denkbar, dass die Maschenweite des Netzes oder der Gitterabstand so dimensioniert ist, dass Schädlinge und Nützlinge hindurchgelangen; in einem solchen Fall kann sich das Netzt oder Gitter auch über den Seitenbereich erstrecken.

Denkbar ist aber auch, dass bei Bildaufnahmevorrichtungen, die ausschließlich zur Analyse von Schädlingen dienen, ein Sammelbereich für die Schädlinge geschaffen wird, der für Nützlinge unzugänglich ist. Auch dies kann mit Hilfe einer Barriere erreicht werden. Die Barriere ist so an der Tafel/Karte oder dem Behälter angebracht, dass ein Innenraum entsteht, in dem sich der Sammelbereich befindet, der von der Außenwelt durch die Barriere abgetrennt ist: ein Schädling kann nur durch die Barriere in den Innenraum gelangen. Die Barriere ist so ausgeführt, dass viele Nützlinge sie nicht durchdringen können, da sie zu groß sind und nicht durch die Gitterabstände oder Maschen passen.

Die Bildaufnahmeeinheit befindet sich vorzugsweise innerhalb des Innenraumes, der durch den Behälter und die Barriere gebildet wird.

Zur Abbildung des Sammelbereichs auf einem oder mehreren Bildsensoren ist eine Lichtquelle erforderlich, mit dem der Sammelbereich beleuchtet wird, so dass vom beleuchteten Sammelbereich Licht in Richtung Bildaufnahmeeinheit gestreut/reflektiert wird. Hierzu kann das Tageslicht verwendet werden. Es ist aber auch denkbar, eine Beleuchtungseinheit zu verwenden, die für eine definierte, vom Tageslicht unabhängige Beleuchtung sorgt. Diese ist vorzugsweise seitlich neben der Bildaufnahmeeinheit angebracht, so dass es zu keinem Schattenwurf der Bildaufnahmeeinheit auf den Sammelbereich kommt.

Es ist auch denkbar, eine Beleuchtungsquelle unterhalb des Sammelbereichs und/oder neben dem Sammelbereich zu positionieren, die den Sammelbereich "von unten" und/oder "von der Seite" beleuchtet, während eine Bildaufnahmeeinheit eine oder mehrere digitale Bildaufnahmen "von oben" erzeugt. Eine solche Anordnung ist insbesondere dann geeignet, wenn lediglich die Zahl der im Sammelbereich befindlichen Gliederfüßer (oder eine Flächendichte) anhand einer oder mehrerer Bildaufnahmen bestimmt werden soll; durch die Beleuchtung von unten heben sich die zumeist dunklen Gliederfüßer sehr gut gegenüber der hellen Beleuchtungseinheit ab. Dies setzt allerdings voraus, dass die Karte/Tafel oder der Boden des Behälters, die/der den Sammelbereich bildet, für die verwendete elektromagnetische Strahlung zumindest teilweise durchlässig ist. Falls eine Bestimmung der vorhandenen Spezies anhand einer oder mehrerer Bildaufnahmen durchgeführt werden soll, kann es notwendig sein, Licht (von oben und/oder von der Seite) auf die Gliederfüßer treffen zu lassen, das von dort zurückgestreut wird und dann auf den Bildsensor gelangt.

Es denkbar, dass mehrere Beleuchtungsquellen den Sammelbereich aus unterschiedlichen Richtungen beleuchten.

Es ist denkbar, dass das elektromagnetische Spektrum des zur Beleuchtung ausgesandten Lichts auf die Farbe der Gliederfüßer und/oder die Farbe des Sammelbereichs angepasst ist, um einen möglichst großen Kontrast zwischen den Gliederfüßern und dem Hintergrund, vor dem sie abgebildet werden, zu erzeugen.

In einer bevorzugten Ausführungsform ist die Beleuchtung und/oder die Farbe und/oder die Oberflächenbeschaffenheit des Sammelbereichs so gewählt, dass die zur Beleuchtung verwendete elektromagnetische Strahlung stärker von den Gliederfüßern zurückgeworfen (reflektiert oder gestreut) wird als von dem Sammelbereich. In einer alternativen Ausführungsform ist die Beleuchtung und/oder die Farbe und/oder die Oberflächenbeschaffenheit des Sammelbereichs so gewählt, dass die zur Beleuchtung verwendete elektromagnetische Strahlung stärker vom Sammelbereich zurückgeworfen (reflektiert oder gestreut) wird als von den Gliederfüßern. Beide Fälle sorgen für einen hohen Kontrast.

In einer besonders bevorzugten Ausführungsform wird Licht eines Spektralbereichs verwendet, für das die Gliederfüßer ein vergleichsweise geringes Absorptions- und Transmissionsvermögen aber ein hohes Reflexions- und Streuvermögen aufweisen. Vorzugsweise wird der größte Anteil an elektromagnetischer Strahlung, das auf einen Gliederfüßer trifft, von diesem zurückgeworfen (reflektiert oder gestreut) und ein kleiner Anteil absorbiert oder transmittiert. Dies erleichtert die Identifizierung der vorliegenden Spezies.

Vorzugsweise weist der Sammelbereich eine raue Oberfläche auf, um direkte Reflexionen des Tageslichts vom Sammelbereich auf den Bildsensor zu vermeiden.

Der Begriff "Licht" und "Beleuchtung" soll im Übrigen nicht bedeuten, dass der Spektralbereich auf sichtbares Licht (etwa 380 nm bis etwa 780 nm) beschränkt ist. Es ist ebenso denkbar, dass zur Beleuchtung elektromagnetische Strahlung mit einer Wellenlänge unterhalb von 380 nm (ultraviolettes Licht) oder oberhalb von 780 nm (infrarotes Licht) verwendet wird. Der Bildsensor und die optischen Elemente sind an die verwendete elektromagnetische Strahlung angepasst.

Die erfindungsgemäße Vorrichtung umfasst ferner eine Steuereinheit. Die Steuereinheit veranlasst die mindestens eine Bildaufnahmeeinheit zur Aufnahme von digitalen Bildaufnahmen. Bildaufnahmen können regelmäßig oder unregelmäßig erzeugt werden. Sie können zu definierten Zeitpunkten aufgenommen werden; denkbar ist beispielsweise eine Bildaufnahme jede Minute oder alle 5 Minuten oder alle 10 Minuten oder einmal pro Stunde oder einmal bis zehnmal pro Tag oder dergleichen.

Die Häufigkeit der Bildaufnahme kann von der verfügbaren Menge elektrischer Energie zur Versorgung der erfindungsgemäßen Vorrichtung abhängig gemacht werden. Wird zur Energieversorgung eine elektrochemische Zelle (Batterie) oder ein aufladbarer Akku verwendet, die/der beispielsweise nur einmal im Jahr erneuert/aufgeladen werden soll, können nur so viele Bildaufnahmen erstellt werden, wie elektrische Energiemenge für ein Jahr vorhanden ist.

Es ist denkbar, die Zeitpunkte zur Erzeugung von Bildaufnahmen an Umweltbedingungen anzupassen. Es ist beispielsweise denkbar, die Steuereinheit so zu konfigurieren, dass nachts keine Bildaufnahmen erstellt werden. Eine solche Konfiguration kann z.B. über einen Helligkeitssensor oder über eine Zeitschaltuhr erreicht werden.

Es ist denkbar, die Zeitpunkte zur Erzeugung von Bildaufnahmen an die Ergebnisse der Analyse von Bildaufnahmen, die von anderen Bildaufnahmevorrichtungen erzeugt worden sind, anzupassen. Ergibt die Analyse der Bildaufnahmen beispielsweise, dass sich Schädlinge in eine Richtung ausbreiten, ist es denkbar, die Zeitintervalle zur Erzeugung von Bildaufnahmen bei den Bildaufnahmevorrichtungen, die sich in der Richtung befinden, zu verkürzen.

Denkbar ist auch, dass die Erzeugung von Bildaufnahmen durch eine Fernsteuerung veranlasst wird. Es ist beispielsweise denkbar, dass ein Nutzer aus der Ferne über ein Funknetz die erfindungsgemäße Bildaufnahmevorrichtung zur Erzeugung einer digitalen Bildaufnahme veranlasst.

Die Steuereinheit kann konfiguriert sein, die aufgenommenen Bilder an die Sendeeinheit zu leiten, um sie über ein Funknetzwerk an ein separates Computersystem zu versenden.

Es ist aber auch denkbar, dass die erfindungsgemäße Bildaufnahmevorrichtung über eine Auswerteeinheit verfügt, die konfiguriert ist, die erzeugten Bildaufnahmen zu analysieren. Die Analyse kann dazu dienen, die Zahl der in dem Sammelbereich vorhandenen Schädlinge und/oder Nützlinge zu ermitteln. Die Analyse kann auch dazu dienen, die in dem Sammelbereich vorhandenen Spezies an Schädlingen und/oder Nützlingen zu identifizieren.

Die Sendeinheit der Bildaufnahmevorrichtung ist konfiguriert, Informationen betreffend die eine oder die mehreren Bildaufnahmen über ein Netzwerk an ein Computersystem zu versenden. Diese Informationen können die eine oder die mehreren Bildaufnahmen selbst sein. Es ist aber auch denkbar, dass diese Informationen die Ergebnisse der Analyse durch die Auswerteeinheit sind, d.h. die Zahl der vorhandenen Schädlinge und/oder Nützlinge und/oder die jeweils identifizierten Spezies.

Die Sendeeinheit kann so ausgestaltet sein, dass sie Informationen über ein Mobilfunknetz (GSM: Global System for Mobile Communications, GPRS: General Packet Radio Service; UMTS: Universal Mobile Telecommunications System, LTE: Long Term Evolution), über ein WLAN (Wireless Local Artea Network), über Bluetooth, über DECT (Digital Enhanced Cordless Telecommunications) über ein Niedrigenergieweitverkehrnetzwerk (Low Power Wide Area Network (LPWAN oder LPN) wie beispielsweise ein NarrowBand IoT Netzwerk und/oder über eine Kombination aus verschiedenen Übertragungswegen übermittelt.

Vorzugsweise ist die Sendeeinheit so ausgestaltet, dass sie die Informationen über eine kurzreichweitige Funkverbindung an eine Basisstation übermittelt, von der die Informationen dann kabelgebunden und/oder über Funk weitergeleitet werden.

In einer besonders bevorzugten Ausführungsform bilden mehrere Bildaufnahmevorrichtungen ein vermaschtes Netz (engl. *Mesh*), d.h. Informationen werden von einer Bildaufnahmevorrichtung zur anderen weitergeleitet. Eine Bildaufnahmevorrichtung befindet sich schließlich in der Nähe einer Basisstation oder verfügt über Mittel zur Übertragung der Informationen über eine größere Distanz als die Distanz zwischen den einzelnen Bildaufnahmevorrichtung, die das vermachte Netz bilden.

Die Bildaufnahmevorrichtung weist eine Energierversorgungseinheit auf, um die elektronischen Komponenten mit elektrischer Energie zu versorgen. Vorzugsweise handelt es sich um eine mobile Einheit wie beispielsweise eine elektrochemische Zelle (Batterie), einen Akkumulator und/oder eine Solarzelle. Besonders bevorzugt handelt es sich um eine Kombination aus aufladbarem Akkumulator und Solarzelle, um zum einen den Wartungsaufwand gering zu halten (keine Batteriewechsel nötig) und um zum anderen auch bei wenig Sonnenstunden eine Energieversorgung gewährleisten zu können (bei einer reinen Solarzelle ist man auf ein Minimum an Sonnenenergie angewiesen).

In einer bevorzugten Ausführungsform sind eine oder mehrere Pflanzenanalysevorrichtungen Bestandteil(e) des erfindungsgemäßen Systems. Eine Pflanzenanalysevorrichtung umfasst, wie eine Bildaufnahmevorrichtung, eine Bildaufnahmeeinheit (mit Bildsensor und optischen Elementen), eine Sendeeinheit, und eine Steuereinheit. Die Pflanzenanalysevorrichtung dient der Analyse des Zustands der angebauten Pflanzen (insbesondere der Kulturpflanzen aber auch vorhandener Opferpflanzen und/oder Schutzpflanzen) und ggf. der Identifizierung und Bewertung von Schäden, die durch Schädlinge verursacht worden sind. Eine solche Pflanzenanalysevorrichtung kann beispielsweise stationär in einem Feld für Kulturpflanzen aufgestellt sein, und dort auf Teile einer Kulturpflanze gerichtet sein (Blätter, Blüte, Stengel, Fruchtkörper und/oder dergleichen), um von diesen Teilen Bildaufnahmen zu erzeugen. Es ist auch denkbar, dass es sich um eine mobile Vorrichtung wie beispielsweise ein (unbemanntes) Fahrzeug oder ein (unbemanntes) Flugzeug (Drohne) handelt, das sich in einem Feld oder über ein Feld bewegt und Bildaufnahmen von den angebauten Pflanzen erzeugt. Bildaufnahmen können regelmäßig oder unregelmäßig erzeugt werden. Sie können zu definierten Zeitpunkten aufgenommen werden. Es ist denkbar, die Zeitpunkte zur Erzeugung von Bildaufnahmen an Umweltbedingungen anzupassen. Es ist denkbar, die Zeitpunkte zur Erzeugung von Bildaufnahmen an die Ergebnisse der Analyse von Bildaufnahmen, die von Bildaufnahmevorrichtungen und/oder anderen Pflanzenanalysevorrichtungen erzeugt worden sind, anzupassen. Es ist denkbar, dass die Erzeugung von Bildaufnahmen durch eine Fernsteuerung veranlasst wird. Die Bildaufnahmen können auf die Anwesenheit von Schäden (vorzugsweise Fraßschäden) untersucht werden. Informationen betreffend die Bildaufnahmen werden von der Pflanzenanalysevorrichtung an das Computersystem übermittel. Bei den übermittelten Informationen kann es sich um die Bildaufnahmen selbst und/oder Ergebnisse einer oder mehrere Analyse der Bildaufnahmen handeln. Die Bildaufnahmen können analysiert werden, um das Entwicklungsstadium der angebauten Pflanzen zu bestimmen (z.B. anhand des BBCH-Codes). Die Bildaufnahmen können analysiert werden, um den Gesundheitszustand der angebauten Pflanzen zu bestimmen (z.B. Mangelerscheinungen).

Vorzugsweise ist jeder Vorrichtung ein Standort zugeordnet. Üblicherweise handelt es sich um den Standort, an dem die jeweilige Vorrichtung Bildaufnahmen erzeugt. Es kann sich aber auch um einen Standort in der Umgebung einer Vorrichtung handeln (z.B. der Standort einer Basisstation, mit der die Vorrichtung über eine Funkverbindung verbunden ist), oder der Standort kann eine Unschärfe aufweisen, indem beispielsweise ein Bereich auf der Erdoberfläche angegeben ist, in dem sich die Vorrichtung befindet (z.B. in Form eines Kreises mit einem definierten Radius).

In einer bevorzugten Ausführungsform weist das erfindungsgemäße System Mittel zur Bestimmung des Standorts der Vorrichtungen auf.

Denkbar ist, dass die Vorrichtung über einen GPS-Sensor (GPS: Global Positioning System) oder einen anderen Sensor eines globalen Satellitennavigationssystems (GNSS) verfügt, mit dem der Standort der Vorrichtung ermittelt werden kann.

Ein Vorteil der Standortbestimmung mittels eines globalen Satellitennavigationssystems ist die hohe Genauigkeit. Nachteile sind die zusätzlichen Bauteilkosten und der vergleichsweise hohe Energiebedarf.

Denkbar ist auch, dass eine Standortbestimmung über die Funkzelle, mit der die Sendeeinheit der verbunden ist, erfolgt. Eine solche Lösung weist üblicherweise eine geringere Genauigkeit bei der Standortbestimmung auf, bedeutet aber geringere Bauteilkosten und einen geringeren Energiebedarf.

Im Mobilfunk beruht die einfachste Art der Standortbestimmung darauf, dass die Zelle, in der sich eine Sendeeinheit befindet, bekannt ist. Da beispielsweise ein eingeschaltetes Mobilfunktelefon mit einer Basisstation in Verbindung steht, lässt sich die Position des Mobilfunktelefons zumindest einer Mobilfunkzelle (Cell-ID) zuweisen. Analog kann auch mit einer erfindungsgemäßen Vorrichtung verfahren werden.

Mit Hilfe von GSM (*Global System for Mobile Communications*) kann der Standort einer Sendeeinheit auf mehrere hundert Meter genau bestimmt werden. In Städten kann der Standort auf 100 bis 500 m genau bestimmt werden; in ländlichen Gegenden erhöht sich der Radius auf 10 km oder mehr. Wird die Information über die Cell-ID mit dem TA-Parameter (TA: *Timing Advance*) kombiniert, dann kann die Genauigkeit erhöht werden. Je höher dieser Wert ist, desto weiter weg ist die Sendeeinheit von der Basisstation. Mit dem EOTD-Verfahren (EOTD: *Enhanced Observed Time Difference*) lässt sich eine Sendeeinheit noch genauer orten. Dabei werden die Laufzeitunterschiede der Signale zwischen der Sendeinheit und mehreren Empfangseinheiten bestimmt.

In einer Ausführungsform erfolgen die Übermittlung von Informationen und die Standortbestimmung über das Sigfox-Netz. Sigfox ist ein Low Power Wide Area Network (LPWAN) und speziell auf kleine Datenpakete und einen sehr stromsparenden Betrieb ausgelegt. Sigfox-Basisstationen können über weite Entfernungen kommunizieren, ohne von Störungen beeinträchtigt zu werden. Die Reichweite einer einzelnen Basisstation, die bis zu einer Million Sendeeinheiten verwalten kann, beträgt 3 bis 5 km in Ballungszentren und 30 bis 70 km in ländlichen Gebieten. Bei Sigfox werden die Datenpakete von allen Basisstationen im Sendebereich empfangen. Darüber lässt sich die Position einer Sendeeinheit bestimmen.

Denkbar ist auch, dass der Standort einer Vorrichtung bei ihrer Registrierung erfasst wird. Ein Schritt der Registrierung besteht in der Verknüpfung von Vorrichtung und Standort. Es ist denkbar, dass ein Nutzer mittels eines mobilen Computersystems (z.B. ein Smartphone oder ein Tablet-Computer oder dergleichen) eine eindeutige Kennung der Vorrichtung erfasst und mit Standortinformationen verknüpft. Die eindeutige Kennung dient zur Identifizierung der Vorrichtung bei ihrer Registrierung. Die eindeutige Kennung kann eine Nummer oder ein alphanumerischer Code oder ein Binärcode oder dergleichen sein, die/der an der Vorrichtung angebracht ist oder in einem Datenspeicher der Vorrichtung abgelegt ist. Die Erfassung der eindeutigen Kennung kann beispielsweise durch Eingabe über ein Eingabemittel (z.B. eine Tastatur, ein Touchscreen, ein Mikrofon (per Spracheingabe) oder dergleichen) in das mobile Computersystem erfolgen. Vorzugsweise ist die eindeutige Kennung in Form eines optisch lesbaren Codes (z.B. ein Strichcode oder ein Matrixcode oder dergleichen) oder in Form eines mittels Funk auslesbaren elektronischen Speichers (z.B. als RFID-Tag) oder dergleichen vorhanden. Dies hat den Vorteil, dass die eindeutige Kennung automatisch mit dem mobilen Computersystem ausgelesen werden kann und Eingabefehler (wie beim Eintippen über eine Tastatur durch einen Nutzer) vermieden werden. Ein optischer Code kann beispielsweise mit einer Kamera, die Bestandteil des mobilen Computersystems sein kann, erfasst werden. In einem weiteren Schritt wird der Standort bestimmt. Es ist denkbar, dass die Mittel zur Standortbestimmung durch das mobile Computersystem des Nutzers bereitgestellt werden. Das mobile Computersystem kann beispielsweise ein Smartphone sein, mit dem der Standort über die Funkzelle, mit der das Smartphone verbunden ist, oder mit einem zum Smartphone gehörigen GPS-Sensor bestimmt wird.

Sind die eindeutige Kennung erfasst und der Standort bestimmt, werden diese Informationen miteinander verknüpft. Durch die Verknüpfung ist der Vorrichtung ein Standort zugeordnet. Es ist denkbar, dass die verknüpften Informationen über ein Netzwerk an ein externes Computersystem übermittelt und dort gespeichert werden. Denkbar ist auch, dass die verknüpften Informationen auf dem mobilen Computersystem des Nutzers gespeichert werden.

Vorzugsweise erfolgt bei der Registrierung zusätzlich eine Verknüpfung der eindeutigen Kennung der Vorrichtung mit einer eindeutigen Kennung des Nutzers, so dass dem Nutzer eine individuelle Vorrichtung (oder mehrere Vorrichtungen) mit einem definierten Standort zugeordnet ist (sind). Vorzugsweise kann der Nutzer infolge dieser Verknüpfung nur Bildaufnahmen von der ihm zugeordneten Vorrichtung empfangen.

Die Informationen, die von den vorhandenen Vorrichtungen (Bildaufnahmevorrichtungen und ggf. Pflanzenanalysevorrichtungen) mittels der entsprechenden Sendeeinheiten an ein Computersystem übermittelt werden, können dort bearbeitet, analysiert, archiviert und/oder gegenüber einem Nutzer ausgegeben werden.

Ein "Computersystem" ist ein System zur elektronischen Datenverarbeitung, das mittels programmierbarer Rechenvorschriften Daten verarbeitet. Ein solches System umfasst üblicherweise einen "Computer", diejenige Einheit, die einen Prozessor zur Durchführung logischer Operationen umfasst, sowie eine Peripherie.

Als "Peripherie" bezeichnet man in der Computertechnik alle Geräte, die an den Computer angeschlossen sind, und zur Steuerung des Computers und/oder als Ein- und Ausgabegeräte dienen. Beispiele hierfür sind Monitor (Bildschirm), Drucker, Scanner, Maus, Tastatur, Laufwerke, Kamera, Mikrofon, Lautsprecher etc. Auch interne Anschlüsse und Erweiterungskarten gelten in der Computertechnik als Peripherie.

Computersysteme von heute werden häufig in Desktop-PCs, Portable PCs, Laptops, Notebooks, Netbooks und Tablet-PCs und so genannte Handhelds (z.B. Smartphone) unterteilt; alle diese Systeme können zur Ausführung der Erfindung genutzt werden.

Die Eingaben in das Computersystem erfolgen über Eingabemittel wie beispielsweise eine Tastatur, eine Maus, ein Mikrofon und/oder dergleichen. Als Eingabe soll auch die Auswahl eines Eintrags aus einem virtuellen Menü oder einer virtuellen Liste oder das Anklicken eines Auswahlkästchens und dergleichen verstanden werden.

Üblicherweise weist ein erfindungsgemäßes System eine Vielzahl (mindestens 10, vorzugsweise mehr als 20) an Bildaufnahmevorrichtungen und ggf. Pflanzenanalysevorrichtungen (zusammen als Vorrichtungen bezeichnet) auf, die einem Computersystem zugeordnet sind.

Die Vorrichtungen und das Computersystem sind über ein Netzwerk miteinander verbunden, so dass die Vorrichtungen Informationen (Daten, Bildaufnahmen, Statusinformationen oder dergleichen) an das Computersystem übermitteln können. Es ist auch denkbar, dass das erfindungsgemäße System so konfiguriert ist, dass das Computersystem Informationen an die Vorrichtungen übermitteln kann. Das Netzwerk, über das das Computersystem und die Vorrichtungen miteinander verbunden sind, ist zumindest teilweise ein Funknetzwerk. Üblicherweise werden Informationen von einer Vorrichtung über eine Sendeeinheit per Funk an eine Basisstation, von der sie (ggf. über weitere Stationen) per Funk und/oder über Kabel an das Computersystem weitergeleitet werden.

Das erfindungsgemäße System ist so konfiguriert, dass die dazugehörigen Vorrichtungen - an einem Ort aufgestellt oder aktiviert - automatisiert Bildaufnahmen erzeugen.

In einer Ausführungsform der vorliegenden Erfindung übermitteln die Vorrichtungen die erzeugten Bildaufnahmen an das Computersystem. Die übermittelten Bildaufnahmen werden auf dem Computer analysiert; dabei werden die Zahl der in dem Sammelbereich vorhandenen Schädlinge und/oder Nützlinge ermittelt, die vorhandenen Spezies identifiziert und, bei Vorliegen einer oder mehrere Pflanzenanalysevorrichtungen werden die Bildaufnahmen in Bezug auf den Status der Pflanzen und/oder auf die Anwesenheit von Schäden untersucht und es wird ggf. die Schadenshöhe ermittelt.

In einer alternativen Ausführungsform werden die erzeugten Bildaufnahmen durch eine Auswerteeinheit der jeweiligen Vorrichtung analysiert. Zum Beispiel kann die Zahl der in dem Sammelbereich vorhandenen Schädlinge/Nützlinge ermittelt werden. Diese Zahl kann dann an das Computersystem übermittelt werden. Es können die vorhandenen Spezies identifiziert werden. Die Namen der Spezies können dann an das Computersystem übermittelt werden. Es kann der Status der angebauten Pflanzen ermittelt werden. Der Status wird dann an das Computersystem übermittelt. Es ist denkbar, dass die erzeugten Bildaufnahmen ebenfalls an das Computersystem übermittelt werden. Es ist denkbar, dass eine erzeugte Bildaufnahme zusammen mit dem Ergebnis der Analyse der jeweiligen Vorrichtung an das Computersystem übermittelt wird. Es ist denkbar, dass die erzeugten Bildaufnahmen erst nach einer Anforderung durch einen Nutzer an das Computersystem übermittelt werden.

Die Analyse der Bildaufnahmen, die von den Bildaufnahmevorrichtungen erzeugt worden sind, kann dazu dienen, zu ermitteln, ob es sich bei einem Organismus in der Bildaufnahme um einen Schadorganismus, einen Schädling, einen Nützling oder einen Organismus handelt, der für den Anbau der Kulturpflanzen ohne Belang ist. Dementsprechend kann eine Identifizierung die Zuordnung zu den drei Kategorien: "schädlich", "nützlich", und "neutral" bedeuten. Vorzugsweise dient die Identifizierung eines Schädlings der Identifizierung von Maßnahmen, die gegen den Schädling ergriffen werden können. Eine zu ergreifende Maßnahme kann beispielsweise die Applikation eines bestimmten Schädlingsbekämpfungsmittels sein.

Unter Identifizierung kann aber auch die Zuordnung einzelner Schädlinge/Nützling zu einem Taxon verstanden werden, d.h. die Zuordnung zu einer Klasse, Ordnung, Überfamilie, Familie, Unterfamilie, Tribus, Gattung, Art, Unterart oder zu einer Zwischenstufe im Sinne der biologischen Taxonomie.

Bei der Identifizierung von Nützlingen kann es darum gehen, diejenigen Nützlinge zu identifizieren, denen in einem Teilgebiet vorhandene Schädling als Nahrungsquelle oder Wirt dienen.

Die Identifizierung und Auszählung der Schädlinge/Nützlinge erfolgt automatisiert. Das bedeutet, dass ein Nutzer die Gliederfüßer in einer Bildaufnahme nicht selbst zählen und identifizieren muss, sondern dass das jeweilige Bild durch ein Computerprogramm in einem Arbeitsspeicher eines Computersystems Bildbearbeitungs- und Bilderkennungsalgorithmen zugeführt wird. Mit Hilfe dieser Algorithmen wird das Bild analysiert, ggf. präpariert (Filterungen und ähnliche Operationen) und es werden Merkmale extrahiert, die einen Schluss darüber erlauben, wie viele Gliederfüßer und welcher Art diese sind. Derartige Algorithmen sind im Stand der Technik ausgiebig beschrieben.

Es ist denkbar zur Identifizierung von Schädlingen/Nützlingen ein künstliches neuronales Netz zu verwenden, das vorab an einer Vielzahl an Bildaufnahmen bekannter Schädlinge/Nützlinge trainiert worden ist.

Vorzugsweise werden weitere Informationen zur Identifizierung der Schädlinge/Nützlinge herangezogen. Beispielsweise kann die Geo-Position genutzt werden. Befindet sich die jeweilige Bildaufnahmevorrichtung beispielsweise in Deutschland, so kommen andere Schädlinge/Nützlinge in Betracht als wenn sich die Bildaufnahmevorrichtung beispielsweise in Brasilien befindet. Auch die aktuelle Jahreszeit ist eine wichtige Information, die genutzt werden kann. Je nach Jahreszeit können unterschiedliche Schädlinge/Nützlinge in Erscheinung treten. Aber auch die angebauten Pflanzen (Kulturpflanzen, Schutzpflanzen, Operfpflanzen) können Auskunft über den Schädling/Nützling Schadorganismus geben.

Auch die Analyse der Bildaufnahmen, die von der mindestens einen Pflanzenanalyevorrichtung erzeugt werden, erfolgt automatisiert. Vorzugsweise werden Algorithmen der künstlichen Intelligenz, besonders vorzugsweise selbstlernende Systeme eingesetzt. Diese Algorithmen sind in der Lage, den Entwicklungsstatus der angebauten Pflanzen anhand spezifischer Merkmale wie beispielsweise der Blattgröße, der Blattform, der Anzahl an Blätter, dem Vorhandensein von Blüten, der Form und Größe von Blüten und dergleichen zu bestimmen. Schäden an Pflanzen oder Pflanzenteilen, insbesondere Fraßschäden, sowie das Ausmaß der Schäden lassen sich als Abweichung vom Normalzustand ebenfalls automatisiert erkennen.

Es ist denkbar, dass ein erfindungsgemäßes System zwei Computersysteme (ein erstes und ein zweites Computersystem) umfasst. Bei dem ersten Computersystem handelt es sich um einen Server, der über ein Netzwerk mit den Vorrichtungen (Bildaufnahmevorrichtungen und ggf. Pflanzenanalysevorrichtungen) in Verbindung steht. Auf diesem Server landen alle von den Vorrichtungen übermittelten Informationen (z.B. Bildaufnahmen, Analyseergebnisse, Statusmeldungen und dergleichen). Auf dem Server können die Informationen analysiert und archiviert werden. Zum Beispiel kann auf dem Server eine Analyse der Bildaufnahmen stattfinden. Das zweite Computersystem (Client) ist mit dem ersten Computersystem (Server) verbunden und kann Informationen (Bildaufnahmen, Analyseergebnisse und dergleichen) abfragen. Das zweite Computersystem wird üblicherweise von einem Endnutzer bedient (zum Beispiel einem Landwirt), der eine oder mehrere Vorrichtungen zum Beispiel auf einem seiner landwirtschaftlich genutzten Felder aufgestellt hat und eine Befallskontrolle durchführen möchte. Das erste Computersystem (Server) wird dann üblicherweise von dem Betreiber der Bildanalysewerkzeuge betrieben und verwaltet. Er kann die Vielzahl an Bildaufnahmen von unterschiedlichen Endnutzern verwenden, um die Algorithmen zur Zählung der Schädlinge und/oder zur Identifizierung von Spezies und/oder Analyse von Schäden fortlaufend zu verbessern. Das System ist vorzugsweise so konfiguriert, dass der Nutzer des zweiten Computersystems nur Bildaufnahmen von dem ersten Computersystem empfangen kann, die von Bildaufnahmevorrichtungen und/oder Pflanzenanalysevorrichtungen stammen, die auf diesen Nutzer registriert sind.

In einer bevorzugten Ausführungsform werden die Informationen, die von verschiedenen Vorrichtungen an das (erste) Computersystem übermittelt werden, analysiert, wobei eine Ausbreitungsrichtung von (spezifischen) Schädlingen ermittelt wird. Es ist beispielsweise denkbar, dass eine Schädlingsspezies zunächst von einer ersten Bildaufnahmevorrichtung detektiert wird und zu einem späteren Zeitpunkt, dieselbe Schädlingsspezies von einer zweiten Bildaufnahmevorrichtung detektiert wird. Daraus kann geschlossen werden, dass sich die entsprechende Schädlingsspezies von der ersten Bildaufnahmevorrichtung in die Richtung der zweiten Bildaufnahmevorrichtung ausbreitet. Bei einer Vielzahl an Bildaufnahmevorrichtungen können präzisere Aussagen zur Ausbreitungsrichtung der Schädlingsspezies getroffen werden.

In einer bevorzugten Ausführungsform wird zudem die Ausbreitungsgeschwindigkeit von Schädlingen oder eines spezifischen Schädlings aus den Bildaufnahmen einer Mehrzahl an Bildaufnahmevorrichtungen ermittelt.

In einer bevorzugten Ausführungsform wird anhand der ermittelten Ausbreitungsrichtung und der ermittelten Ausbreitungsgeschwindigkeit eine Vorhersage getroffen, die angibt, wann die Schädlinge/Schädlingsspezies weitere Bereiche (Felder, Gebiete) erreichen werden.

In einer bevorzugten Ausführungsform fließen Wetterdaten (aktuelles Wetter, Wetter der vergangenen Tage, vorhergesagtes Wetter der nächsten Tage) in die Vorhersage der Ausbreitungsrichtung und der Ausbreitungsgeschwindigkeit ein.

Vorhersagen werden üblicherweise für einen Zeitraum von 1 bis 20 Tagen in die Zukunft erzeugt, besonders bevorzugt für einen Zeitraum von 1 bis 10 Tagen in die Zukunft.

In einer bevorzugten Ausführungsform werden in einem Feld mit Hilfe einer oder mehrerer Bildaufnahmevorrichtungen die im Sammelbereich / in den Sammelbereichen befindlichen Gliederfüßer identifiziert. In einem nächsten Schritt wird analysiert, ob unter den identifizierten Gliederfüßern Schädlinge und ihnen gegenüberstehende Nützlinge sind, denen die identifizierten Schädlinge als Nahrung oder Wirt dienen. Falls solche Nützlinge und/oder Schädlinge vorhanden sind, wird ihre Zahl bestimmt. Diese Zahlen werden verglichen, um zu erkennen, ob die Nützlinge allein in der Lage sind, eine unkontrollierte Vermehrung und/oder Ausbreitung der Schädlinge zu verhindern. Vorzugsweise werden die Zahlen zueinander ins Verhältnis gesetzt. Das Verhältnis der Zahl an Schädlingen zu der Zahl an ihnen gegenüberstehenden Nützlingen wird mit einem empirisch ermittelten Schwellenwert verglichen. Ist das Verhältnis kleiner als der Schwellenwert, ist nicht mit einer unkontrollierte Vermehrung und/oder Ausbreitung der Schädlinge zu rechnen. Ist das Verhältnis größer als der Schwellenwert, sollten Maßnahmen ergriffen werden, um einen Ernteverlust zu vermeiden. Das Ergebnis des Vergleichs kann einem Nutzer, vorzugsweise dem Landwirt, der das betrachtete Feld bewirtschaftet, angezeigt werden. Vorzugsweise wird dem Nutzer zusätzlich eine Maßnahme zur Bekämpfung der Schädlinge empfohlen. Zu der Empfehlung kann die Nennung eines Pflanzenschutzmittels (zum Beispiel eines Insektizids), die auszubringende Menge an Pflanzenschutzmittel, ein günstiger Zeitraum zum Ausbringen des Pflanzenschutzmittels und dergleichen angezeigt werden.

In einer bevorzugten Ausführungsform wird die Befallsdichte mit einem spezifischen Schädling für ein Teilgebiet ermittelt. Es wird ermittelt, ob eine Schadschwelle überschritten ist. Bei der Klärung, ob die Schadschwelle überschritten ist, werden vorzugsweise Informationen zum Pflanzenstatus (Gesundheit der Pflanzen, Entwicklungsstadium, zu erwartender Ernteertrag) berücksichtigt. Bei der Klärung, ob die Schadschwelle überschritten ist, werden vorzugsweise Informationen zu vorhandenen Nützlingen (Zahl und Art der vorhandenen Nützlinge) berücksichtigt. Das Ergebnis wird einem Landwirt, der das Teilgebiet bewirtschaftet, gegenüber angezeigt. Ist die Schadschwelle überschritten, werden Maßnahmen empfohlen, die der Landwirt ergreifen kann, um den zu erwartenden Schaden zu reduzieren.

In vielen Teilgebieten werden Grünstreifen angrenzend an ein Feld für Kulturpflanzen angebaut, um die Biodiversizität zu erhöhen. Es ist denkbar, dass ein Landwirt die Effektivität der Grünstreifen überprüfen will und/oder gegenüber eine Behörde nachweisen muss. In einer bevorzugten Ausführungsform wird daher mittels der in einem Teilgebiet vorhandenen Bildaufnahmevorrichtungen, die Zahl und Art der in dem Teilgebiet vorkommenden Nützlinge oder die Zahl einer oder mehrerer definierter Nützlingsspezies ermittelt. Aus den ermittelten Daten werden für eine oder mehrere Nützlingsspezies Flächendichten ermittelt (z.B. Anzahl der Nützlingsspezies pro Hektar). Die Flächendichten werden dem Landwirt, der das Teilgebiet bewirtschaftet, und/oder einer Behörde übermittelt und angezeigt.

Ein weiterer Gegenstand der vorliegenden Erfindung ist ein Computerprogrammprodukt. Das entsprechende Computerprogramm ist üblicherweise auf dem Computersystem des Endnutzers installiert und gestattet ihm eine Befallskontrolle aus der Ferne.

Das Computerprogramm ist so konfiguriert, dass es die Informationen, die die mindestens eine erfindungsgemäße Vorrichtung (direkt oder über einen dazwischengeschalteten Server) liefert, für den Nutzer bereitstellt. Der Nutzer erhält mit dem Computerprogramm einen Überblick über diejenigen Vorrichtungen, die ihm zugeordnet sind. Die Zuordnung kann beispielsweise dadurch erfolgen, dass jede Vorrichtung eine einzigartige Kennung (z.B. eine Identifikationsnummer) aufweist, die der Nutzer manuell über eine Tastatur oder per Sprachbefehl über ein Mikro oder ein anderes Eingabegerät in das Computerprogramm eingibt. Denkbar ist auch, dass die Kennung als optisch lesbarer Code (z.B. als Strichcode oder Matrixcode (QR-Code, DataMatrix-Code oder dergleichen)) auf der Vorrichtung vorhanden ist und mit einem entsprechenden Lesegerät (Strichcode-Scanner, Kamera) ausgelesen und in das Computerprogramm übertragen werden kann. Auch die Verwendung eines RFID-Tags oder die Übertragung einer Kennung aus einem Permanentspeicher der Vorrichtung per Bluetooth oder Nearfield-Kommunikation oder über eine W-LAN-Verbindung oder dergleichen ist denkbar.

Vorzugsweise lässt sich mit dem Computerprogramm eine geografische Karte aufrufen, in der der Standort der einem Nutzer zugeordneten Vorrichtungen verzeichnet ist. Es ist denkbar, dass dieser Standort über einen GPS-Sensor, der Bestandteil der Vorrichtung sein kann, bestimmt wird. Es ist aber auch denkbar, dass es sich um einen Standort handelt, der der Funkzelle, in der sich die Vorrichtung befindet, zugeordnet ist (zum Beispiel der Standort einer Basisstation).

Durch Auswählen einer Vorrichtung (zum Beispiel durch Eingabe von Kenndaten oder die Auswahl aus einem virtuellen Menü oder Anklicken eines Standortes oder dergleichen) kann der Nutzer Informationen zu der jeweiligen Vorrichtung abrufen. Er kann beispielsweise die Zahl der in der Vorrichtung zu verschiedenen Zeitpunkten vorhandenen Schädlinge abrufen. Er kann die zu verschiedenen Zeitpunkten erzeugten Bildaufnahmen anzeigen lassen. Er kann die in einer Bildaufnahme erkannten Spezies anzeigen lassen. Er kann in einer Bildaufnahme anzeigen lassen, welche Spezies erkannt worden sind und welche nicht.

In einer bevorzugten Ausführungsform zeigt das Computerprogramm den Nutzer eine Vorhersage für die Ausbreitung einer oder mehrerer Schädlingsspezies an. Vorzugsweise erfolgt diese Anzeige in Form einer geografischen Karte, in der farblich kodiert ist, aus welcher Richtung sich eine Schädlingsspezies ausbreitet, mit welcher Geschwindigkeit sie sich ausbreitet und/oder ob eine Schadschwelle überschritten ist oder nicht.

Die Erfindung wird nachstehend anhand von Figuren und Beispielen näher erläutert, ohne die Erfindung auf die in den Figuren und Beispielen genannten Merkmale und Merkmalskombinationen beschränken zu wollen.

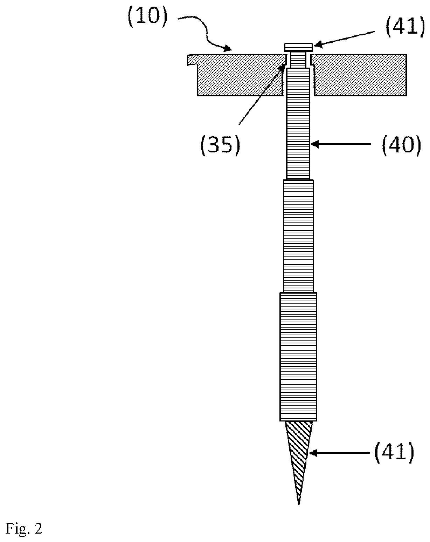

Es zeigen:

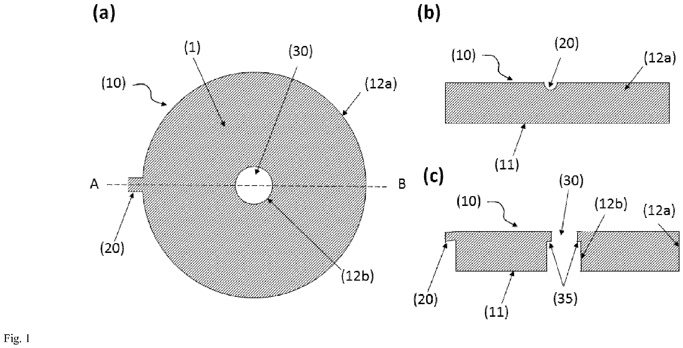

Figur 1 zeigt schematisch einen Behälter (10), der einen Sammelbereich (1) für Schädlinge und/oder Nützlinge bereitstellt.
Figur 1a zeigt den Behälter (10) in einer Aufsicht. Figur 1b zeigt den Behälter (10) in einer Seitenansicht aus Richtung des Punkts A (siehe Fig. la). Figur 1c zeigt den Behälter (10) von der Seite im Querschnitt entlang der gestrichelten Linie A-B (siehe Fig. 1a).
   Der Behälter (10) weist eine Zylinderform mit einem runden Querschnitt auf. Unten ist der Zylinder durch einen Boden (11) geschlossen, nach oben ist er geöffnet. Der Boden (11) und zwei in sich geschlossene, runde Seitenwände (12a, 12b), die sich senkrecht zum Boden (11) erstrecken, bilden einen Raum zur Aufnahme einer Flüssigkeit. Von oben betrachtet man den Sammelbereich (1). In der Mitte des Behälters (10) ist eine kreisförmige Aussparung (30) eingebracht, die durch die Seitenwand (12b) eingegrenzt wird. Die Aussparung verjüngt sich nach oben hin; wobei ein Ring (35) entsteht, der als Auflagefläche für eine Halterung (siehe Fig. 2) dienen kann.
   An der Seite ist eine halbkreisförmige Aussparung in der Seitenwand (12a) eingebracht, an der eine Rinne (20) nach außen weist. Über diese Rinne kann Regenwasser, das in den Behälter (10) gelangt, abfließen.
Figur 2 zeigt den in Fig. 1c dargestellten Behälter (10) zusammen mit einer Teleskopstange (40), an der der Behälter befestigt ist. Mit Hilfe der Teleskopstange kann der Abstand zwischen dem Sammelbereich (1) und dem Boden variiert werden. Der Behälter ruht mit dem Ring (35) auf der Teleskopstange (41). Die Teleskopstange (41) weist im oberen Bereich ein Innengewinde auf (in der Figur nicht dargestellt), in der eine Schraube (41) eingedreht ist, mit der der Behälter (10) und die Teleskopstange (40) miteinander verklemmt werden. Im unteren Bereich weist die Teleskopstange (40) eine Spitze (41) auf, die in einen Erdboden gerammt werden kann. Es ist denkbar, andere Vorrichtungen zum Aufstellen des Behälters (10) vorzusehen, wie beispielsweise ein Schraubgewinde zum Einbohren in den Boden oder ein Dreibein. Weitere Möglichkeiten sind denkbar.

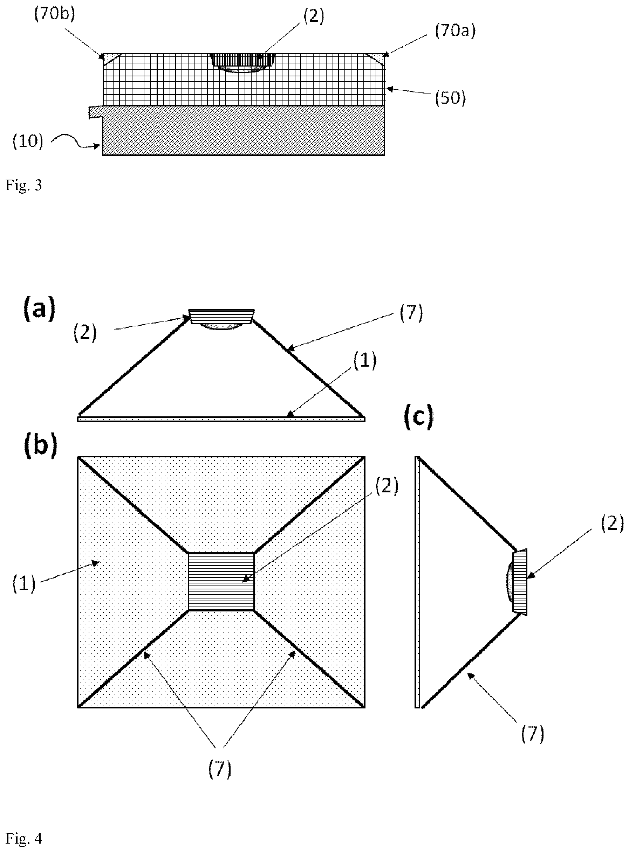

Figur 3 zeigt den in Fig. 1b dargestellten Behälter (10), über den ein Käfig (50) angebracht ist. Dabei ist der Gitterabstand so dimensioniert, dass keine Blätter in den Behälter gelangen. Am Kopf des Gitters (50) ist die Bildaufnahmeeinheit (2) angebracht. Sie befindet sich innerhalb des Käfigs. Zwei Beleuchtungseinheiten (70a, 70b) sorgen für eine definierte Ausleuchtung des Sammelbereichs.
Figur 4 zeigt schematisch eine Tafel, die einen Sammelbereich (1) bereitstellt. Figur 4a zeigt die Tafel in einer Seitenansicht. Figur 1b zeigt die Tafel in der Aufsicht. Figur 1c zeigt die Karte in einer weiteren Seitenansicht. An der Karte sind Haltestäbe (7) angebracht, an deren Ende eine Bildaufnahmeeinheit befestigt ist.

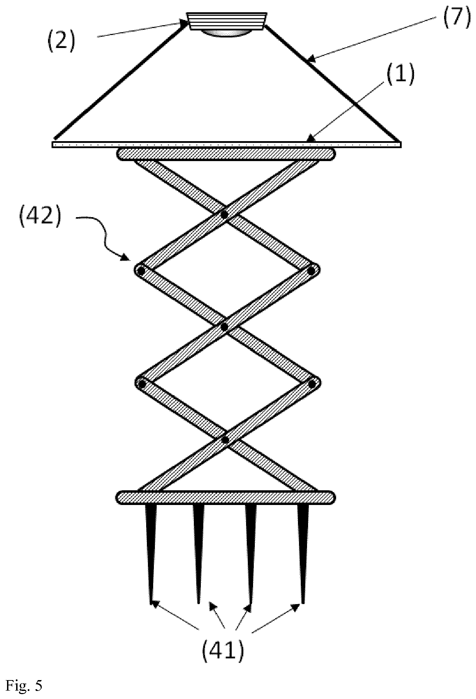

Figur 5 zeigt die in Figur 4a dargestellte Tafel, die an einer Hebebühne (42) angebracht ist. Die Hebebühne (42) weist um unteren Bereich Spitzen (41) auf, mit denen die Hebebühne in einem Boden befestigt werden kann.

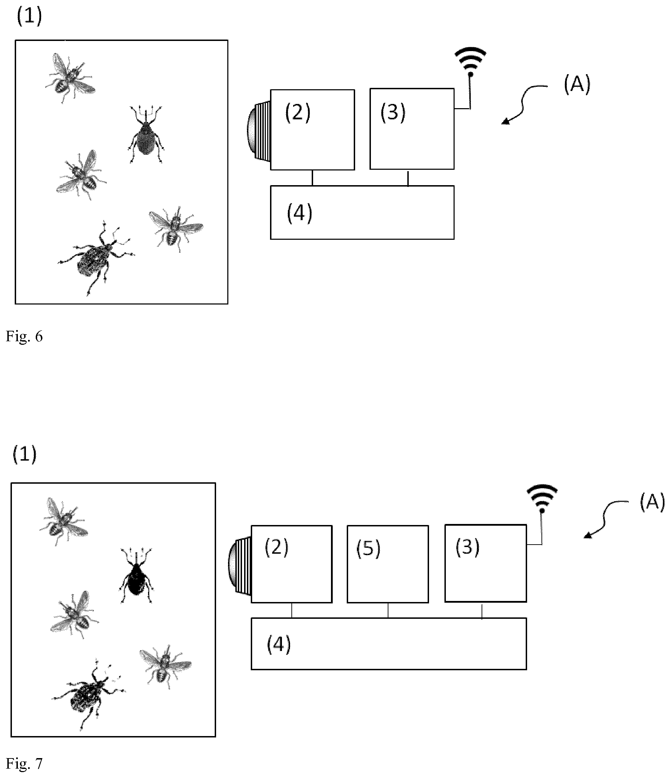

Figur 6 zeigt schematisch eine Ausführungsform der erfindungsgemäßen Bildaufnahmevorrichtung (A). Die Bildaufnahmevorrichtung (A) umfasst einen Sammelbereich (1), eine Bildaufnahmeeinheit (2), eine Sendeeinheit (3) und eine Steuereinheit (4).
Figur 7 zeigt schematisch eine weitere Ausführungsform der erfindungsgemäßen Bildaufnahmevorrichtung (A). Die Bildaufnahmevorrichtung (A) umfasst einen Sammelbereich (1), eine Bildaufnahmeeinheit (2), eine Sendeeinheit (3), eine Steuereinheit (4) und eine Auswerteinheit (5).

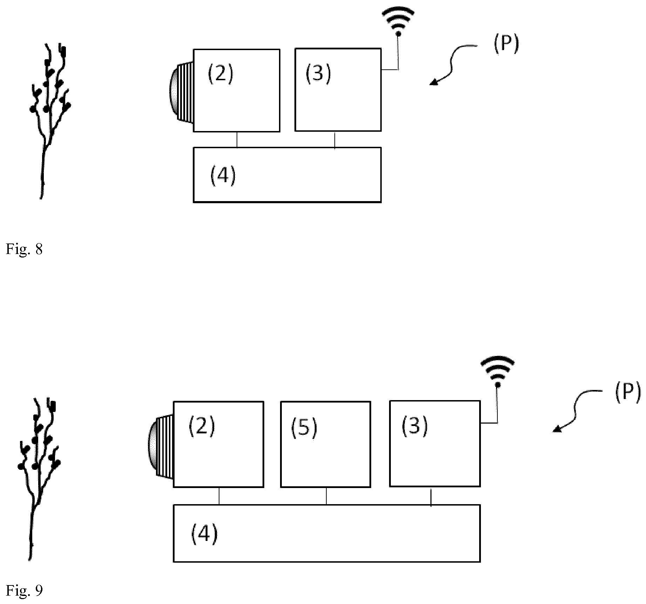

Figur 8 zeigt schematisch eine Ausführungsform der erfindungsgemäßen Pflanzenanalysevorrichtung (P). Die Pflanzenanalysevorrichtung (P) umfasst eine Bildaufnahmeeinheit (2), eine Sendeeinheit (3) und eine Steuereinheit (4).
Figur 9 zeigt schematisch eine weitere Ausführungsform der erfindungsgemäßen Pflanzenanalysevorrichtung (P). Die Pflanzenanalysevorrichtung (P) umfasst eine Bildaufnahmeeinheit (2), eine Sendeeinheit (3), eine Steuereinheit (4) und eine Auswerteinheit (5).

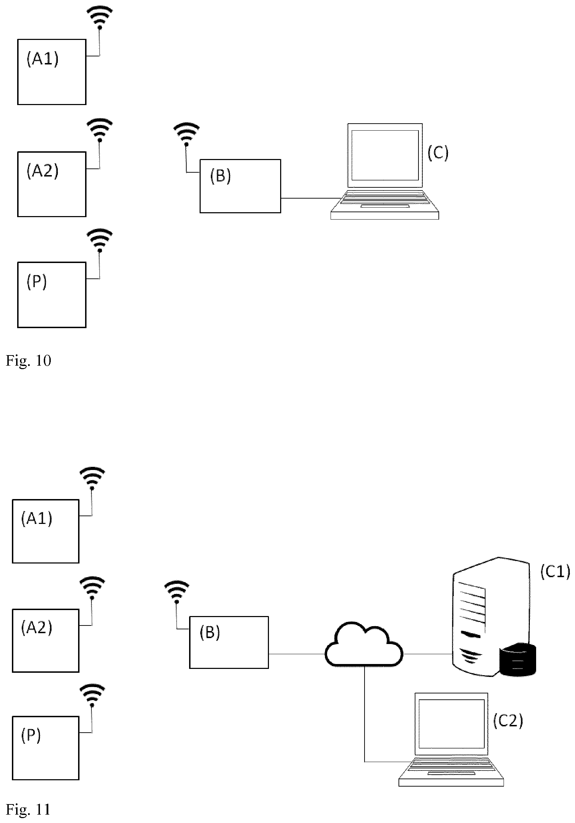

Figur 10 zeigt schematisch eine Ausführungsform des erfindungsgemäßen Systems. Das System umfasst eine Mehrzahl an Vorrichtungen (A1, A2, P), die Bildaufnahmen erzeugen. Informationen betreffend die Bildaufnahmen werden über ein Funknetz an eine Basisstation (B) übermittelt. Von dort werden sie über ein Netzwerk an ein Computersystem (C) übermittelt.
Figur 11 zeigt schematisch eine weitere Ausführungsform des erfindungsgemäßen Systems. Das System umfasst eine Mehrzahl an Vorrichtungen (A1, A2, P), die Bildaufnahmen erzeugen. Informationen betreffend die Bildaufnahmen werden über ein Funknetz an eine Basisstation (B) übermittelt. Von dort werden sie über ein Netzwerk (dargestellt durch die Cloud) an ein Computersystem (C1) übermittelt. Informationen betreffend die Bildaufnahmen können mittels des Computersystems (C2) von dem Computersystem (C1) abgerufen werden.

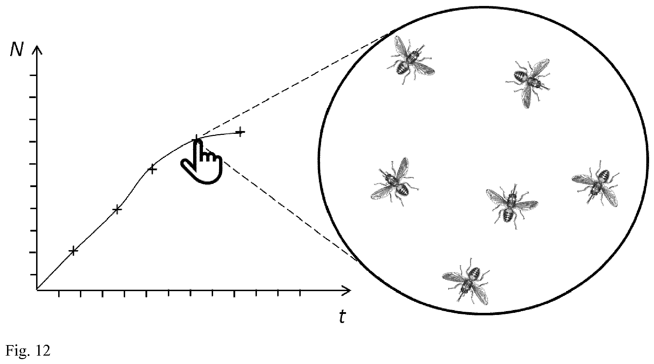

Figur 12 zeigt schematisch eine Darstellung des erfindungsgemäßen Computerprogramms. Es ist die Zahl *N* der zu definierten Zeitpunkt *t* in Bildaufnahmen automatisiert gezählten Spezies grafisch dargestellt. Durch Anklicken eines Datenpunktes wird die dazugehörige Bildaufnahme angezeigt.

## Patentansprüche

1. System umfassend:
- eine Mehrzahl an Bildaufnahmevorrichtungen in einem Gebiet, wobei jede Bildaufnahmevorrichtung
∘ einen Sammelbereich,
∘ eine Bildaufnahmeeinheit,
∘ eine Sendeeinheit, und eine
∘ eine Steuereinheit
umfasst,
wobei die Steuereinheit konfiguriert ist,
▪ die Bildaufnahmeeinheit zu veranlassen, Bildaufnahmen von dem Sammelbereich zu erzeugen, und
▪ die Sendeeinheit zu veranlassen, Informationen betreffend die Bildaufnahmen über ein Netzwerk an ein Computersystem zu versenden,
- das Computersystem, das konfiguriert ist,
• die Informationen betreffend die Bildaufnahmen von der Mehrzahl an Bildaufnahmevorrichtungen zu empfangen,
• die empfangenen Informationen zu analysieren, wobei Informationen zu den in einem Teilgebiet vorhandenen Schädlingen und/oder Nützlingen gewonnen werden,
• die Informationen zu den in einem Teilgebiet vorhandenen Schädlingen und/oder Nützlingen einem oder mehreren Nutzern zu übermitteln.

2. System gemäß Anspruch 1, wobei
- die Steuereinheit konfiguriert ist, die Sendeeinheit zu veranlassen, die erzeugten Bildaufnahmen an das Computersystem zu versenden,
- das Computersystem konfiguriert ist,
• die versandten Bildaufnahmen zu empfangen,
• die empfangenen Bildaufnahmen von Bildaufnahmevorrichtungen des Teilgebietes zu analysieren, wobei Schädlinge und/oder Nützlinge identifiziert werden und für mindestens eine Schädlingsspezies und/oder mindestens eine Nützlingsspezies eine Flächendichte für das Teilgebiet berechnet wird,
• die mindestens eine berechnete Flächendichte einem Nutzer zu übermitteln.

3. System gemäß Anspruch 2, wobei
- das Computersystem konfiguriert ist,
• die empfangenen Bildaufnahmen von Bildaufnahmevorrichtungen des Teilgebietes zu analysieren, wobei für mindestens eine Schädlingsspezies ermittelt wird, ob eine Schadschwelle überschritten ist, wobei für die Ermittlung der Information, ob eine Schadschwelle überschritten ist, die Zahl der Nützlinge, denen die Schädlingsspezies an Nahrungsquelle oder Wirt dienen, berücksichtigt wird,
• die ermittelte Information, ob eine Schadschwelle überschritten ist, an einen Nutzer zu übermitteln.

4. System gemäß Anspruch 1, ferner umfassend
- mindestens eine Pflanzenanalysevorrichtung in einem Teilgebiet, wobei die mindestens eine Pflanzenanalysevorrichtung
∘ eine Bildaufnahmeeinheit,
∘ eine Sendeeinheit, und eine
∘ eine Steuereinheit
umfasst,
wobei die Steuereinheit konfiguriert ist,
▪ die Bildaufnahmeeinheit zu veranlassen, Bildaufnahmen von Pflanzen oder Pflanzenteilen, die in dem Teilgebiet angebaut sind, zu erzeugen, und
▪ die Sendeeinheit zu veranlassen, die erzeugten Bildaufnahmen über ein Netzwerk an ein Computersystem zu versenden,
- das Computersystem, das konfiguriert ist,
• die versandten Bildaufnahmen zu empfangen,
• die empfangenen Bildaufnahmen zu analysieren, wobei der Entwicklungsstatus der Pflanzen und/oder die Art und/oder die Schwere von Schäden an den Pflanzen oder Pflanzenteilen durch Schädlinge und/oder der Gesundheitszustand der Pflanzen ermittelt wird,
• den Entwicklungsstatus der Pflanzen und/oder die Art und/oder die Schwere von Schäden an den Pflanzen oder Pflanzenteilen durch Schädlinge und/oder den Gesundheitszustand der Pflanzen einem Nutzer zu übermitteln

5. System gemäß Anspruch 4, wobei
- das Computersystem konfiguriert ist,
• die von den Bildaufnahmevorrichtungen des Teilgebiets versandten Bildaufnahmen zu empfangen,
• die empfangenen Bildaufnahmen zu analysieren, wobei Schädlinge identifiziert werden, wobei für mindestens eine Schädlingsspezies ermittelt wird, ob eine Schadschwelle überschritten ist, wobei für die Ermittlung der Information, ob eine Schadschwelle überschritten ist, der Entwicklungsstatus der Pflanzen und/oder die Art und/oder die Schwere von Schäden an den Pflanzen oder Pflanzenteilen durch Schädlinge und/oder der Gesundheitszustand der Pflanzen berücksichtigt wird,
• die ermittelte Information, ob eine Schadschwelle überschritten ist, an einen Nutzer zu übermitteln.

6. System gemäß Anspruch 5, wobei
- das Computersystem konfiguriert ist,
• die von den Bildaufnahmevorrichtungen des Teilgebiets versandten Bildaufnahmen zu empfangen,
• die empfangenen Bildaufnahmen zu analysieren, wobei eine Zahl an Nützlingen identifiziert wird, wobei mindestens eine Schädlingsspezies den Nützlingen als Nahrungsquelle oder Wirt dient, wobei für die Ermittlung der Information, ob eine Schadschwelle überschritten ist, die Zahl der Nützlinge, denen die mindestens eine Schädlingsspezies als Nahrungsquelle oder Wirt dient, berücksichtigt wird,
• die ermittelte Information, ob eine Schadschwelle überschritten ist, an einen Nutzer zu übermitteln.

7. System gemäß einem der Ansprüche 1 bis 6, wobei
- das Computersystem konfiguriert ist,
• die empfangenen Bildaufnahmen zu analysieren, wobei eine Ausbreitungsrichtung mindestens einer Schädlingsspezies und eine Ausbreitungsgeschwindigkeit der mindestens einen Schädlingsspezies ermittelt wird,
• die Ausbreitungsrichtung und die Ausbreitungsgeschwindigkeit einem oder mehreren Nutzern zu übermitteln.

8. System gemäß Anspruch 7, wobei
- das Computersystem konfiguriert ist,
• für ein oder mehrere Teilgebiete eine Vorhersage für die Ausbreitung mindestens einer Schädlingsspezies für einen zukünftigen Zeitraum zu erzeugen,
• die Vorhersage einem oder mehreren Nutzern zu übermitteln.

9. System gemäß Anspruch 8, wobei in die Vorhersage Wetterdaten einfließen.

10. System gemäß einem der Ansprüche 1 bis 9, wobei die Bildaufnahmevorrichtungen und/oder die mindestens eine Pflanzenanalysevorrichtung eine Halterung umfasst, mit der die Bildaufnahmeeinheit in einem definierten Abstand über dem Boden positioniert wird kann, wobei der Abstand variabel ist.

11. System gemäß einem der Ansprüche 1 bis 10, wobei die Bildaufnahmevorrichtungen Mittel zur automatisierten Reinigung des Sammelbereichs umfasst.

12. System gemäß einem der Ansprüche 1 bis 11, wobei eine oder mehrere Bildaufnahmevorrichtungen eine Barriere umfassen, die eine Verschmutzung des Sammelbereichs durch Pflanzenteile verhindert.

13. Verfahren umfassend die Schritte
- Aufstellen einer Mehrzahl an Bildaufnahmevorrichtungen in einem Gebiet, wobei jede Bildaufnahmevorrichtung
∘ einen Sammelbereich,
∘ eine Bildaufnahmeeinheit,
∘ eine Sendeeinheit, und eine
∘ eine Steuereinheit
umfasst,
- Erzeugen von Bildaufnahmen des Sammelbereichs jeder Bildaufnahmevorrichtung,
- Übermitteln von Informationen betreffend die Bildaufnahmen an ein Computersystem,
- Analysieren der übermittelten Informationen und Generieren von Informationen zu den in einem Teilgebiet vorhandenen Schädlingen und/oder Nützlingen,
- Übermitteln der Informationen zu den in einem Teilgebiet vorhandenen Schädlingen und/oder Nützlingen an einen oder mehrere Nutzer.

14. Computerprogrammprodukt umfassend ein Computerprogramm, das in einen Arbeitsspeicher eines Computers geladen werden kann und dort den Computer dazu veranlasst, folgende Schritte ausführen:
- Empfangen von Informationen von einer Mehrzahl an Bildaufnahmevorrichtungen in einem Gebiet, wobei die Informationen von jeder Bildaufnahmevorrichtung Bildaufnahmen betreffen, die von einem Sammelbereich der Bildaufnahmevorrichtung erzeugt worden sind,
- Analysieren der empfangenen Informationen und Generieren von Informationen zu den in einem Teilgebiet vorhandenen Schädlingen und/oder Nützlingen,
- Übermitteln der Informationen zu den in einem Teilgebiet vorhandenen Schädlingen und/oder Nützlingen an einen oder mehrere Nutzer.
